# EUROPÄISCHE PATENTSCHRIFT

(11) **EP 1 402 970 B1**
(45) Veröffentlichungstag und Bekanntmachung des Hinweises auf die Patenterteilung: **12.07.2006**
(21) Anmeldenummer: 03021066.0
(22) Anmeldetag: 18.09.2003
(51) Int. Cl.: B21D 43/05, B23Q 7/04

(54) **Werkstück-Tragvorrichtung für Transferpressen**
Transfer device for transferpresses
Dispositif de transfert de pièces pour presses de transfert

(30) Priorität: 26.09.2002 DE 20214818 U
(43) Veröffentlichungstag der Anmeldung: 31.03.2004
(73) Patentinhaber: Bilsing Automation GmbH, 57439 Attendorn (DE)
(72) Erfinder: Bilsing, Alfred, 57439 Attendorn (DE)
(74) Vertreter: Jochem, Bernd

(56) Entgegenhaltungen:
- EP-A- 1 002 594
- DE-A- 2 417 131
- DE-A- 2 534 820
- US-A- 4 368 022

## Beschreibung

Die Erfindung betrifft eine Werkstück-Tragvorrichtung für Transferpressen, bestehend aus in einer bestimmten Stellung lösbar an einem Transferbalken befestigbaren Tragrohren, die mit mehreren in Abhängigkeit von der Form der zu tragenden Werkstücke angeordneten Greiferarmen verbunden sind, an deren Enden sich an den Werkstücken angreifende Greifwerkzeuge befinden. Eine solche Werkstück-Tragvorrichtung ist z. B. in der DE 195 34 386 beschrieben.

Mittels derartiger Tragvorrichtungen werden Werkstücke, wie z. B. die zu formenden Blechteile einer Kraftfahrzeugkarosserie, durch eine Transferpresse transportiert, wobei sie z. B. von Greifwerkzeugen in Form von Vakuumsaugern ergriffen und gehalten werden. Nach den Formoperationen in der Transferpresse werden die Werkstücke auf einem Tisch oder Förderband zum Weitertransport abgelegt, indem die Vakuumsauger belüftet werden.

Viele Bauteile, wie z. B. die Seitenwände und Türen von Kraftfahrzeugen, sind an dem einen Ende wesentlich dicker als an dem anderen Ende. Wenn sie im Werkzeug eine Lage einnehmen, bei der ihre Oberseite waagerecht ausgerichtet ist, erstreckt sich die Unterseite vom dünneren zum dickeren Ende schräg nach unten. Diese Schräglage erschwert das Ablegen der Werkstücke nach der Formgebung in der Transferpresse. Das dünnere Ende der Werkstücke fällt aus einer der Dickendifferenz entsprechenden Höhe auf den Tisch bzw. das Förderband. Dabei kann es beschädigt werden, denn die Teile haben wegen geringer Blechstärke sehr empfindliche Kanten.

Der Erfindung liegt deshalb die Aufgabe zugrunde, eine Werkstück-Transportvorrichtung der eingangs genannten Art zu schaffen, die mit einfachen Mitteln eine schonende Ablage ungleich dicker Werkstücke erlaubt, und diese Aufgabe wird erfindungsgemäß dadurch gelöst, daß die Greiferarme über einen Schwenkrahmen mit den Tragrohren verbunden sind, der während eines Transportvorgangs relativ zu den Tragrohren zwischen bestimmten Endstellungen um eine horizontale Gelenkachse verschwenkbar ist.

Durch die Erfindung wird erreicht, daß die geformten Werkstücke vor dem Ablegen mittels des Schwenkrahmens in eine Lage gebracht werden können, in der sich ihre Unterseite im wesentlich waagerecht erstreckt, so daß sie insgesamt gleichmäßig auf eine Ablage aufgesetzt werden können und nicht mit einem Ende fallend aufschlagen.

In der bevorzugten praktischen Ausführungsform ist der Schwenkrahmen auf der an den Tragrohren abgestützten Gelenkachse gelagert und durch einen mit horizontalem Abstand von der Gelenkachse zwischen den Tragrohren und dem Schwenkrahmen angeordneten Bewegungsantrieb verschwenkbar, wobei dieser wenigstens einen doppelt wirkenden Pneumatikzylinder aufweist, dessen relativ zueinander bewegliche Teile mit den Tragrohren und/oder dem Schwenkrahmen gelenkig verbunden sind und dessen Kolben im wesentlichen vertikal bewegbar ist. Diese Konstruktion ist sehr einfach zu realisieren, insbesondere dann, wenn in bevorzugter Ausführung der Schwenkrahmen durch miteinander verbundene Rohre gebildet ist. In diesem Fall braucht man keine systemfremden Sonderteile. Es können gebräuchliche, zu den Rohren passende Klemmteile benutzt werden, um einerseits die Gelenkteile und andererseits den Pneumatikzylinder und seine Kolbenstange mit den Tragrohren und den Rohren des Schwenkrahmens zu verbinden.

Um einen für ein bestimmtes Werkstück geeigneten Schwenkwinkel zu erhalten, wird ein Pneumatikzylinder mit einem bestimmten Hub ausgewählt. Die Feineinstellung des Schwenkwinkels kann durch Verschiebung der Klemmstelle des Pneumatikzylinders an den Tragrohren und dem Schwenkrahmen vorgenommen werden.

Wenn eine leichte Demontierbarkeit gewünscht ist, braucht nur eine der Gelenkverbindungen zwischen den Tragrohren und dem Schwenkrahmen, z. B. durch Splinte, die in die Gelenkachse eingreifen, gesichert zu werden. Das andere Gelenk kann als Steckgelenk ausgebildet sein. Seine Teile lassen sich einfach und schnell auseinanderziehen, nachdem die durch Splinte gesicherte Gelenkverbindung gelöst worden ist.

Es versteht sich, daß sich der Vorschlag eines gesteuert bewegbaren Schwenkrahmens zwischen den Tragrohren und den Greiferarmen auch mit anderen Mitteln als hier beispielsweise beschrieben, realisieren läßt. So könnte z. B. die Schwenkbewegung durch einen Drehantrieb erzeugt werden. Außerdem könnte die Schwenkbewegung statt als reine Drehbewegung um ein einziges Drehzentrum durch Verschwenken um mehrere parallele Achsen erfolgen. Bei einer weiteren alternativen Ausführungsform werden zur Erzeugung einer Schwenkbewegung des Schwenkrahmens wenigstens zwei in Längsrichtung der Tragrohre von einander entfernt angeordnete Pneumatikzylinder eingesetzt, deren relativ zueinander bewegliche Teile jeweils mit den Tragrohren oder dem Schwenkrahmen gelenkig verbunden sind und die jeweils gegenläufig ein- und ausfahrbar sind.

Ein bevorzugtes Ausführungsbeispiel der Erfindung wird nachstehend anhand der Zeichnung näher erläutert. Es zeigen:
- Fig. 1: eine Seitenansicht der Tragrohre und des Schwenkrahmens einer erfindungsgemäßen Werkstück-Tragvorrichtung für Transferpressen in einer Stellung, wie sie im Werkzeug eingenommen wird;
- Fig. 2: die Werkstück-Tragvorrichtung nach Fig. 1, wiederum in Seitenansicht, in einer Stellung, wie sie während der Ablage eines Werkstücks ungleichmäßiger Dicke eingenommen wird;
- Fig. 3: einen Teil der Vorrichtung nach Fig. 1 und 2 in größerem Maßstab;
- Fig. 4 und 5: eine Draufsicht und eine Endansicht einer vorbekannten Werkstück-Tragvorrichtung.

In der Zeichnung sind die an sich bekannten Tragrohre einer Werkstück-Tragvorrichtung für Transferpressen mit 10 bezeichnet. Die beiden gezeigten Rohre 10 liegen in Flucht. Sie sind jeweils mit einem in einer hinteren Ebene liegenden und so verdeckten, sich parallel erstreckenden Tragrohr verbunden und werden jeweils mittels einer an ihren äußeren Enden angebrachten Luftkupplung 12 und einer nahe den gegeneinander weisenden Enden angeordneten Brücke 14 derart auf einen nicht gezeigten Transferbalken einer Transferpresse aufgelegt, daß sie sich im montierten Zustand in paralleler Lage auf der einen bzw. anderen Seite neben dem Transferbalken befinden.

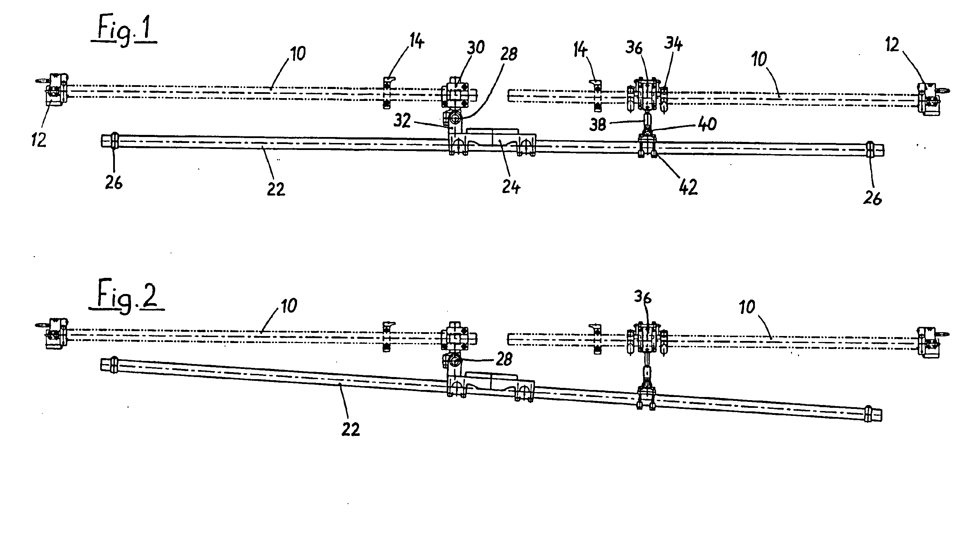

Normalerweise sind an die Tragrohre 10 eine Reihe von in Fig. 1 und 2 nicht gezeigten Greiferarmen angeklemmt, die sich von den Tragrohren 10 aus meistens unter verschiedenen Winkeln schräg nach unten erstrecken und an ihren unteren freien Enden Vakuumsauger oder andere Greifwerkzeuge tragen, die während des Betriebs an bestimmten Stellen der zu transportierenden Werkstücke angreifen.

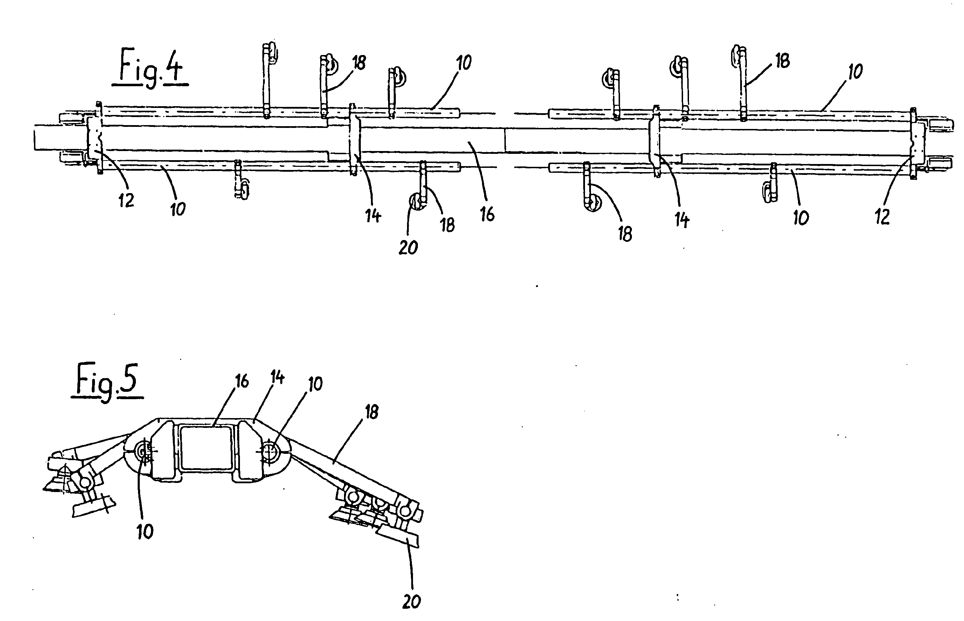

Die vorstehend geschilderte Situation ist in Fig. 4 und 5 dargestellt, wobei der Transferbalken mit 16, die Greiferarme mit 18 und die Vakuumsauger mit 20 bezeichnet sind. Diese Darstellung dient der Veranschaulichung des Standes der Technik.

Bei der erfindungsgemäßen Ausführung nach Fig. 1 bis 3 sind die Greiferarme 18 nicht an die Tragrohre 10 angeklemmt oder in anderer Weise mit diesen verbunden, sondern an den Tragrohren 10 ist ein durch Rohre gebildeter Schwenkrahmen 22 verschwenkbar gelagert, an dem die in Fig. 1 bis 3 nicht gezeigten Greiferarme 18 mitsamt der Vakuumsauger 20 befestigbar sind. Im Ausführungsbeispiel besteht der Schwenkrahmen 22 aus zwei Rohren, die in der Mitte durch eine Verbindungsplatte 24 und an ihren äußeren Enden durch Rohrverbinder 26 miteinander verbunden sind.

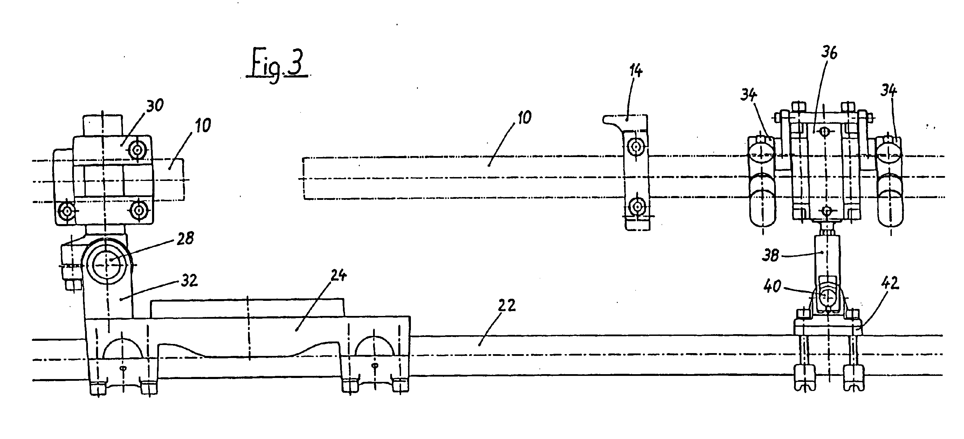

Wie am besten aus Fig. 3 ersichtlich, ist der Schwenkrahmen 22 auf einer horizontalen Schwenkachse 28 gelagert, die ihrerseits an zwei an den Tragrohren 10 fixierten Klemmblöcken 30 gelagert ist. Im Beispielsfall ist das auf seiten des Schwenkrahmens 22 gelegene Gelenkteil 32 mit der Verbindungsplatte 24 verbunden. Das beschriebene Gelenk 28, 30, 32 hat in der Praxis die Form eines einfachen Steckgelenks, dessen Gelenkteile sich einfach axial auseinanderziehen und dadurch voneinander trennen lassen.

Um den Schwenkrahmen 22 relativ zu den Tragrohren 10 um einen bestimmten Winkel verschwenken zu können, sind mit axialem Zwischenabstand zum Klemmblock 30 an den Tragrohren 10 mittels Klemmgliedern 34 zwei doppelt wirkende Pneumatikzylinder 36 befestigt, deren Kolben in vertikaler Richtung verfahrbar sind, so daß jeweils eine mit ihnen verbundene, nach unten herausragende Kolbenstange 38 abzusenken und wieder hochzuziehen ist. An ihrem unteren Ende ist die Kolbenstange 38 über einen Gelenkbolzen 40 verschwenkbar mit einem am Schwenkrahmen 22 angeklemmten Klemmstück 42 verbunden. In den Gelenkbolzen 40 eingreifende, nicht gezeigte Splinte halten die Gelenkverbindung 38, 40, 42 zuverlässig zusammen, so daß auch die Steckverbindung des Schwenkgelenks 28, 30, 32 sich nicht lösen kann.

Solange der Kolben im Pneumatikzylinder 36 sich in seiner oberen Endstellung befindet, nehmen die Tragrohre 10 und die Rohre des Schwenkrahmens 22 die in Fig. 1 und 3 gezeigte parallele, horizontale Lage ein. Wird dagegen der Kolben des Pneumatikzylinders 36 in seine untere Endstellung verschoben, fährt auch die Kolbenstange 38 nach unten und nimmt dabei die in der Zeichnung rechte Seite des Schwenkrahmens 22 mit, so daß sich die in Fig. 2 gezeigte Schräglage einstellt. Der Schrägstellungswinkel ist so gewählt, daß in dieser Lage ein bestimmtes vom Schwenkrahmen 22 getragenes, ungleichmäßig dickes Werkstück mit seiner Unterseite horizontal ausgerichtet ist, so daß es schonungsvoll auf eine horizontale Ablage aufgesetzt werden kann.

Wie aus der Zeichnung ersichtlich, können zur Feinjustierung der Schrägstellung des Schwenkrahmens 22 die Klemmglieder 34 und die Klemmstücke 42 gelockert und dann zusammen mit den Pneumatikzylindern 36 längs der Tragrohre 10 und der Rohre des Schwenkrahmens 22 verschoben werden.

Es versteht sich, daß zur Abwandlung der beschriebenen Vorrichtung nicht nur die bereits oben erwähnten Änderungen vorgenommen, sondern auch die nur beispielhaft gezeigten Klemmglieder, Klemmblöcke und Klemmstücke durch andere Verbindungsteile mit entsprechender Funktion ersetzt werden können.

## Patentansprüche

1. Werkstück-Tragvorrichtung für Transferpressen, bestehend aus in einer bestimmten Stellung lösbar an einem Transferbalken (16) befestigbaren Tragrohren (10), die mit mehreren in Abhängigkeit von der Form der zu tragenden Werkstücke angeordneten Greiferarmen (18) verbunden sind, an deren Enden sich an den Werkstücken angreifende Greifwerkzeuge (20) befinden, **dadurch gekennzeichnet, daß** die Greiferarme (18) über einen Schwenkrahmen (22) mit den Tragrohren (10) verbunden sind, der während eines Transportvorgangs relativ zu den Tragrohren (10) zwischen bestimmten Endstellungen um eine horizontale Gelenkachse (28) verschwenkbar ist.

2. Tragvorrichtung nach Anspruch 1, **dadurch gekennzeichnet, daß** der Schwenkrahmen (22) auf der an den Tragrohren (10) abgestützten Gelenkachse (28) gelagert und durch einen mit horizontalem Abstand von der Gelenkachse (28) zwischen den Tragrohren (10) und dem Schwenkrahmen (22) angeordneten Bewegungsantrieb (36) verschwenkbar ist.

3. Tragvorrichtung nach Anspruch 2, **dadurch gekennzeichnet, daß** der Bewegungsantrieb (36) wenigstens einen doppelt wirkenden Pneumatikzylinder aufweist, dessen relativ zu einander bewegliche Teile (36, 38) mit den Tragrohren und/oder dem Schwenkrahmen (22) gelenkig verbunden sind und dessen Kolben im wesentlichen vertikal bewegbar ist.

4. Tragvorrichtung nach einem der Ansprüche 1 bis 3, **dadurch gekennzeichnet, daß** der Schwenkrahmen (22) durch miteinander verbundene Rohre gebildet ist.

## Claims

1. A workpiece carrier device for transfer presses, comprising carrier tubes (10) which can be releasably secured in a given position to a transfer beam (16) and which are connected to a plurality of gripper arms (18) which are arranged depending on the form of the workpieces to be carried and at the ends of which are provided gripping tools (20) engaging on the workpieces, **characterised in that** the gripper arms (18) are connected to the carrier tubes (10) via a pivot frame (22) which during a transport operation relative to the carrier tubes (10) is pivotable about a horizontal pivot axis (28) between given end positions.

2. A carrier device according to Claim 1, **characterised in that** the pivot frame (22) is mounted on the pivot axis (28) supported on the carrier tubes (10) and is pivotable by means of a motion drive (36) arranged at a horizontal distance from the pivot axis (28) between the carrier tubes (10) and the pivot frame (22).

3. A carrier device according to Claim 2, **characterised in that** the motion drive (36) has at least one double-acting pneumatic cylinder whose parts (36,38) which are moveable relative to one another are connected in an articulated manner to the carrier tubes and/or the pivot frame (22) and whose piston is moveable substantially vertically.

4. A carrier device according to any one of Claims 1 to 3, **characterised in that** the pivot frame (22) is formed by interconnected tubes.

## Revendications

1. Dispositif de transfert de pièces pour presses de transfert, constitué de tubes de support (10) se fixant de façon amovible dans une certaine position sur une barre de transfert (16), et reliés à plusieurs bras préhenseurs (18) disposés en fonction de la forme des pièces à supporter, dont les extrémités sont munies d'outils de préhension (20) qui prennent les pièces,
**caractérisé en ce que**
les bras préhenseurs (18) sont reliés aux tubes de support (10) par un cadre pivotant (22) qui, pendant une opération de transport, pivote relativement aux tubes de support (10), autour d'un axe horizontal d'articulation, entre des positions d'extrémité déterminées.

2. Dispositif de transfert selon la revendication 1,
**caractérisé en ce que**
le cadre pivotant (22) logé sur l'axe d'articulation (28) s'appuyant sur les tubes de support (10) pivote au moyen d'un entraînement (36) disposé entre les tubes de support (10) et le cadre pivotant (22) avec un écartement horizontal par rapport à l'axe d'articulation (28).

3. Dispositif de transfert selon la revendication 2,
**caractérisé en ce que**
l'entraînement (36) présente au moins un vérin pneumatique à double action, dont les pièces (36, 38) mobiles les unes par rapport aux autres sont à liaison articulée avec les tubes de support et/ou le cadre pivotant (22), et dont le piston est sensiblement mobile verticalement.

4. Dispositif de transfert selon l'une des revendications 1 à 3,
**caractérisé en ce que**
le cadre pivotant (22) est constitué de tubes reliés les uns avec les autres.
